# EUROPEAN PATENT SPECIFICATION

(11) **EP 0 799 125 B1**
(45) Date of publication and mention of the grant of the patent: **30.06.1999**
(21) Application number: 95943062.0
(22) Date of filing: 12.12.1995
(51) Int. Cl.: B29C 70/68, B29C 33/14

(54) **METHOD AND MOLD FOR PRODUCING AN AFFIXATION MEMBER WITH AN INTERENGAGING FASTENING MEMBER AND ARTICLE OBTAINED THEREBY**
VERFAHREN UND FORM ZUR HERSTELLUNG EINES BEFESTIGUNGSELEMENTS MIT EINEM INEINANDERGREIFENDEN VERBINDUNGSELEMENT UND SO HERGESTELLTER ARTIKEL
PROCEDE ET MOULE DE FABRICATION D'UN ELEMENT DE FIXATION COMPORTANT UN ELEMENT D'ACCROCHAGE ET ARTICLE AINSI OBTENU

(30) Priority: 22.12.1994 JP 32014294
(43) Date of publication of application: 08.10.1997
(73) Proprietor: MINNESOTA MINING AND MANUFACTURING COMPANY, St. Paul, Minnesota 55133-3427 (US)
(72) Inventor: TOMINAGA, Shinichi, Saint Paul, MN 55133-3427 (US)
(74) Representative: Hilleringmann, Jochen, Dipl.-Ing.
(86) International application number: US9516072
(87) International publication number: WO9619338

(56) References cited:
- WO-A-92/08600
- FR-A- 2 609 758
- US-A- 4 673 542
- US-A- 5 110 649
- US-A- 5 352 307
- PATENT ABSTRACTS OF JAPAN vol. 8, no. 112 (M-298) [1549] , 25 May 1984 & JP,A,59 020630 (HASHIMOTO FORMING K. K. K.), 2 February 1984,

## Description

The present invention relates to an affixation member provided with an interengaging fastener member, particularly to an affixation member provided with an interengaging fastener member comprising a body for covering an article surface, molded by hot-compressing a material into a desired shape, and an interengaging fastener member having a base connected with the body and an engaging part provided on a major surface of the base and projecting from the body, which affixation member is secured to the article surface by engaging the engaging part of the interengaging fastener member with the article surface. The affixation member of this kind is suitably used as a substrate for an inner trim of a vehicle.

Further, the present invention relates to a method for producing the above affixation member. Furthermore, the present invention relates to a mold for producing the above affixation member.

For example, it has been known that an interengaging fastener member with a base and an engaging part provided on a major surface of the base is used for securing an affixation member on a surface of article such as car body, ship-body, domestic appliance or building, for the purpose of protection or decoration. In this case, the base of the interengaging fastener member is connected with a body of the affixation member, while another interengaging fastener member to be mated with the former is usually fixed on the objective surface of the article.

A "headed element type" fastener member is preferably used as the interengaging fastener member of the above kind, having a base and a plurality of headed elements projecting uptight from a major surface of the base and integrally molded with the base by resin material, because a sufficient attachment force is generally obtainable therefrom when it is combined with another fastener member of the same structure (see JP-A-5-194685). Also, it is possible to use a "hook-and-loop type" fastener although the attachment force is somewhat inferior to the former.

On the other hand, it has been known that an affixation member having a molded substrate made of a composite containing thermosetting resin and filler and molded into a desired shape through a hot-compression molding is used in the field of car, electric appliance or furniture, particularly for the purpose of damping noise or shock. In the molded substrate of this kind, the filler is one selected from (1) wooden material, such as pulp or paper, (2) fibrous material, such as regenerated cotton, worsted fiber, jute or glass fiber, and (a) foam such as expanded polystyrene or the combination thereof. The thermosetting resin is generally phenolic resin. Such a molded substrate is called, for example, as "resin-felt member".

In general, the affixation member used as an inner trim for a vehicle is prepared by laying a wadding material having a heat-insulation effect on the molded substrate of this kind and further laying a top layer on the wadding material. If the inner trim is, for example, a molded ceiling of vehicle, it is attached to a roof panel by using fastening means such as bolts at several points. To simplify the attachment operation, the interengaging fastener member is effectively used as the fastening means (see JP-A-6-64830).

In this connection, details of methods for the production and uses of the above conventional molded substrate and inner trim are described in the following known documents:
(i) "Comprehensive Survey of Data for Weight-Saving Technology of Automobile (Material)", p.689 to 691; published by Fuji Techno System K.K. in 1980,
(ii) "Comprehensive Car Material for Design Engineer"; published by Nikkei Business Publication K.K. in 1993, and
(iii) "Polymeric Material for Automobile", p.116 to 119; published by CMC K.K. in 1989.

When the affixation member with the conventional interengaging fastener member is attached to an objective article surface, it is necessary to firmly fixing the interengaging fastener member with a body of affixation member (for example, the above molded substrate) so as to ensure the attachment force of fastener. A separate fastening means such as adhesive, pressure-sensitive double-sided sticky tape or clip, has been used in the prior art for fixing the interengaging fastener member to the body of affixation member. Particularly to the affixation member with the molded substrate, the interengaging fastener member is fixed by such fastening means during a succeeding process at a predetermined position on a surface of the substrate molded into a desired shape through a hot-compression process.

In the conventional fastening means for fixing the interengaging fastener member to the body of affixation member, it is possible to obtain a firm fixation by applying a primer treatment on a surface of body or a surface of base of the interengaging fastener member for the purpose of ensuring the adhesive force, or by attaching the clip onto the base of the interengaging fastener member through a welding process. However, since such preparative operations are complicated to need skills, there is a risk of rise of production cost. Also, since the interengaging fastener member is fixed after the body is molded, the working efficiency may be lowered due to the increase of the number of processes.

As one of solutions for these problems, it is described in JP-A-6-64830 that the interengaging fastener member is arranged in a mold as an insert when the affixation member is molded, whereby the interengaging fastener member is firmly fixed to the body. In this solution, however, the interengaging fastener member used is one having a base of a special shape for the purpose of obtaining the firm fixation. While having its own utility, this approach may not be convenient for use in some applications.

From WO-A-92/08600 an affixation member, a method for producing an affixation member, and a mould for producing an affixation member according to the preamble of claim 1, 5, and 11, respectively, are known.

It is the object of the present invention to provide an affixation member with an improved inner strength reducing the possibility that the interengaging fastener member separates from the body upon removing the affixation member from the article surface. Moreover, it is the object of the present invention to provide a method and a mould for producing such an affixation member.

According to the invention, these objects are solved by an affixation member as defined in claim 1 and by a method and a mould for producing such an affixation member as defined in claims 5 and 11.

The present invention provides an affixation member comprising a body for covering an article surface, molded by hot-compressing a material into a desired shape, and an interengaging fastener member having a base connected with the body and an engaging part provided on a major surface of the base and projected from the body; the affixation member being secured to the article surface by engaging the engaging part of the interengaging fastener member with the article surface, wherein the interengaging fastener member is fixed at a predetermined position on the body by not-compressing the body to a thickness of about one third to one tenth of its original thickness so that a hot-melt adhesive arranged between a back surface of the base opposite to the major surface thereof and a surface of the body permeats into the body.

According to a preferred embodiment, the body is molded from a composite containing thermoplastic resin and filler. Also, the engaging part of the interengaging fastener member preferably may comprise a plurality of headed elements arranged on the base in a predetermined spaced relationship; each of the headed elements including a stem projecting from the major surface of the base, and a head connected to a distal end of the stem. Such an affixation member may be suitably used as an inner trim for a vehicle, while laying a top layer on a surface of the body, on which no interengaging fastener member is arranged.

Further, according to the present invention, a method is proposed, for producing an affixation member comprising a body for covering an article surface, molded by hot-compressing a material into a desired shape, and an interengaging fastener member having a base connected with the body and an engaging part provided on a major surface of the base and projecting from the body; the affixation member being secured to the article surface by engaging the engaging part of the interengaging fastener member with the article surface, characterized in that the method comprises the steps of:
a) preparing a pair of molds, each having a molding surface for compression-molding the body, at least one of which has a recess at a predetermined position of the molding surface for accommodating the engaging part of the interengaging fastener member;
b) placing, on the molding surface of the mold having the recess, the interengaging fastener member with a hot-melt adhesive layer on a back surface of the base opposite to the major surface, so that the engaging part is accommodated in the recess and the hot-melt adhesive is adapted to be brought into contact with the material of the body;
c) arranging the molding surface of the mold, on which the interengaging fastener member is placed, adapted to be opposite to the molding surface of another mold, and disposing the material of the body between these molding surfaces;
d) compressing and heating the material of the body between the pair of molds to a thickness of about one third to one tenth of the original thickness of the body material; so as to mold the body of desired shape and to soften the hot-melt adhesive layer; and
e) solidifying the hot-melt adhesive layer, so as to fix the interengaging fastener member at a predetermined position of the body molded.

According to this method, the mold with the recess prepared in step a) preferably holds the interengaging fastener member at a predetermined position without the plastic deformation of the engaging part of the interengaging fastener member during the compression in step d). In this case, the recess of the mold may have a wall capable of being brought into contact with the engaging part of the interengaging fastener member without the deformation of the engaging part. Alternatively, the recess of the mold may be capable of accommodating the engaging part of the interengaging fastener member without being brought into contact with the engaging part. An excised portion is preferably provided on the edge of the recess, for receiving the outer edge portion of the base of the interengaging fastener member. If the engaging part of the interengaging fastener member comprises a plurality of headed elements arranged on the base in a predetermined spaced relationship, each of the headed elements including a stem projecting from the major surface of the base and a head connected to a distal end of the stem, the mold with the recess prepared in step a) comprises a plurality of holes, each for accommodating at least one headed element.

According to further aspect of the present invention, a mold is proposed, for producing an affixation member comprising a body for covering an article surface, molded by hot-compressing a material into a desired shape, and an interengaging fastener member having a base connected with the body and an engaging part provided on a major surface of the base and projecting from the body; the affixation member being secured to the article surface by engaging the engaging part of the interengaging fastener member with the article surface, characterized in that the mold has a recess at a predetermined position of a molding surface for compression-molding the body to a thickness of about one third to one tenth of its original thickness, to accommodate the engaging part of the interengaging fastener member, so that the interengaging fastener member is held at a predetermined position without the plastic deformation of the engaging part of the interengaging fastener member during the compression process.

In this mold, the recess of the mold may have a wall capable of being brought in contact with the engaging part of the interengaging fastener member without the deformation of the engaging part. Conveniently, the recess of the mold may accommodate the engaging part of the interengaging fastener member without being brought into contact with the engaging part. Preferably, an excised portion is provided on the edge of the recess, for receiving the outer edge portion of the base of the interengaging fastener member. If the engaging part of the interengaging fastener member comprises a plurality of headed elements arranged on the base in a predetermined spaced relationship, each of the headed elements including a stem projecting from the major surface of the base and a head connected to a distal end of the stem, the recess preferably comprises a plurality of holes, each for accommodating at least one headed element.

The hot-melt adhesive is applied between the back surface of the base of the interengaging fastener member and the front surface of the body to firmly fix the interengaging fastener member with the body. Heat for the hot-compression molding of the body can be used as heat necessary for melting or softening the hot-melt adhesive. The affixation member thus structured is readily and assuredly attached to the article surface by the interengaging fastener member firmly secured to the body by the bonding force of the hot-melt adhesive, and fixedly held at a predetermined position on the article surface.

In the hot-compression molding process, the interengaging fastener member applied with a hot-melt adhesive layer on the back surface of the base thereof is placed on the molding surface of the mold while accommodating the engaging part in the recess. When the material of the body is hot-compressed to a thickness of about one third to one tenth of its original thickness, the hot-melt adhesive is molten or softened due to heat for molding the body. Thereby the hot-melt adhesive permeates the material of the body and solidifies to fix the interengaging fastener member with the body. In such a manner, by conducting the molding step of the body simultaneously with the coupling step of the interengaging fastener member, it is possible to reduce the cost for producing the affixation member and elevating the working efficiency.

The mold with the recess for accommodating the engaging part of the interengaging fastener member can support the interengaging fastener member at a predetermined position while avoiding the plastic deformation of the engaging part of the interengaging fastener member during the compression molding process of the body. Accordingly, it is possible to mold the body without damaging the engaging part of the interengaging fastener member. If the hot-melt adhesive has been applied on the back surface of the base of the interengaging fastener member, the interengaging fastener member can be firmly secured to the body.

The present invention will be further explained with reference to the appended figures, wherein like structure is referenced by like numerals throughout the several views, and wherein:
Figure 1 is a cross-section of an affixation member according to one embodiment of the present invention;
Figure 2 is a schematic view for explaining the production process of the affixation member of the present invention, illustrating a cross-section of a mold;
Figure 3 is a schematic view for explaining the production process of the affixation member of the present invention, illustrating cross-sections of a material of a body, an interengaging fastener member and a mold;
Figure 4 is a cross-section illustrating a latter stage of the production process shown in Figure 3;
Figure 5 is a schematic view illustrating a modification of a mold used for the production of the affixation member according to the present invention;
Figure 6 is a schematic view illustrating another modification of a mold used for the production of the affixation member according to the present invention;
Figure 7 is a schematic view illustrating further modification of a mold used for the production of the affixation member according to the present invention;
Figure 8 is a schematic view illustrating further more modification of a mold used for the production of the affixation member according to the present invention;
Figure 9 is a schematic view illustrating still further modification of a mold used for the production of the affixation member according to the present invention;
Figure 10 is (a) through (c) being a schematic view, respectively, illustrating alternative modification of a mold used for the production of the affixation member according to the present invention;
Figure 11 is a perspective view of an inner trim for a vehicle using the affixation member according to the present invention; and
Figure 12 is a cross-section of the inner trim of Figure 11.

The present invention will be described in more detail with reference to the preferred embodiments illustrated in the attached drawings. In the drawings, common reference numerals are used for denoting the same or similar elements.

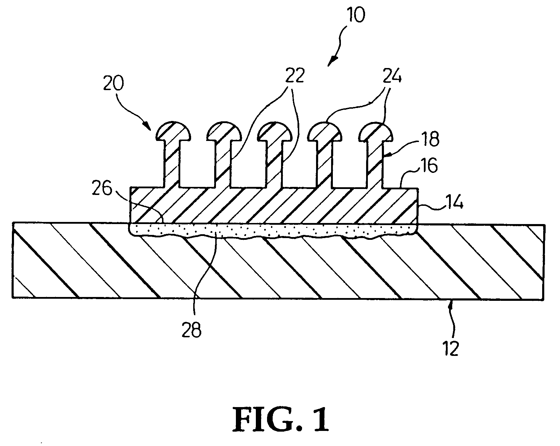

Fig. 1 shows an affixation member 10 according to one embodiment of the present invention. The affixation member 10 includes a body 12 molded by hot-compressing a material into a desired shape, a base 14 coupled to the body 12 and an interengaging fastener member 20 having an engaging part 18 provided on a major surface 16 of the base 14 (hereinafter referred to as a fastener member 20). The affixation member 10 is attached to an objective article surface under a sufficient attachment force so that the body 12 can cover the article surface, by engaging the engaging part 18 of the fastener member 20 with another mating interengaging fastener member (not shown) fixed onto the article surface.

The body 12 is formed by a molded substrate (a so-called resin-felt substrate) of a composite containing thermosetting resin and filler through a hot-compression molding process, and may has various shapes other than the illustrated one. In the particularly favorable embodiment, the body 12 is molded from a composite of regenerated cotton impregnated with phenolic resin. According to such a composite, it is possible to easily and accurately mold the same into a desired shape. Also, the molded substrate has excellent resistance to impact, dimensional stability and bending strength. In this connection, a fiber length of the regenerated cotton is in a range between 5 mm and 50 mm. As the phenolic resin, a thermosetting phenolic resin containing phenol and formaldehyde as major components may be used.

If the body 12 is molded from such a composite through a well-known hot-compression molding, a thickness of material is generally reduced to one third to one tenth of the original. Also, a weight of the molded body 12 in a unit area is preferably in a range between 0.6 kg/m² and 2.0 kg/ m². If the weight in a unit area is smaller than the lower limit, the bending strength of the body 12 is liable to decrease, while if larger than the upper limit, the handling is liable to be worsened because a total weight of the affixation member increases. For example, it is possible to mold the body 12 having a weight in a unit area of 1.3 kg/m² by hot-compressing a composite having the original thickness of about 15 mm to a thickness of about 3 mm.

The engaging part 18 of the fastener member 20 includes a plurality of headed elements arranged apart from each other on the major surface 16 of the base 14 at a predetermined distance therebetween (hereinafter referred to as headed elements 18). The respective headed element 18 is provided with a stem 22 projecting generally upright from the base 14 and a semi-spherical head 24 armed at a distal end of the stem 22 into a contour swollen from the outer periphery of the stem 22.

The base 14 may be of various dimensions and shapes such as rectangle, circle or oval, so that the plurality of headed elements 18 can be fixedly held thereon. The stem 22 of the headed element 18 may be of various shapes such as circular cylinder, prism or frustro-cone. It may be possible to provide a plurality of stems for one head 24. The heads 24 is of various shapes such as sphere, cone or umbrella, other than the illustrated semi-sphere. Also, the headed element 18 may be arranged on the base 14 in a desired manner, such as a matrix manner or a zigzag manner.

The back surface 26 of the base 14 opposite to the major surface 16 is coupled to the body 12 via a hot-melt adhesive 28 described later. An area of the back surface 26 is preferably not less than 500 mm² and more preferably not less than 1000 mm². If this value is less than 500 mm², it is impossible to obtain a sufficient bonding force derived from the hot-melt adhesive, whereby the fastener member 20 is liable to detach from the body 12. A thickness of the base 14 is preferably in a range between 0.5 mm and 2.0 mm, and a height of the headed element 18 is preferably in a range between 0.5 mm and 3.0 mm. Further, a total height of the fastener member 20 (a thickness of the base 14 plus a height of the headed element 18) is preferably not more than 5 mm, more preferably not more than 4 mm. If this value exceeds 5 mm, a gap between the article surface and the affixation member 10 becomes large to result in a risk of adverse effect on design and function of the affixation member. Particularly, when the affixation member 10 is an inner trim of vehicle, there is a problem of narrowing a room space of the vehicle.

The fastener member 20 may be formed by polymeric material such as polyamide, polyimide, polyester, polypropylene, polyethylene, ionomer or polyacetal. Particularly, polyamide is a favorable material on the view point that the deformation of the fastener member 20 is effectively prevented during a hot-compression molding of the body 12 described later, because of its excellent thermal durability and mechanical strength. More excellent thermal durability, mechanical strength and dimensional stability against heat and moisture can be imparted to the fastener member 20, if engineering plastics such as polyphenylene sulfide, polyether sulfon, polyether imide, polysulfon or polyarylate, is used as a material therefor. Also, as is well-known, an additive may be added to the polymer material, such as plasticizer, rubber, carbon fiber, glass fiber or carbon black. Of them, carbon black is one of suitable additives which can improve the antistatic property of the fastener member 20 and rationalize the elastic modulus of the base 14 and headed element 18, as well as improve the durability in the low temperature environment (for example, at- 30°C).

The fastener member 20 may be formed integrally with the base 14 and the headed elements 18 through an injection-molding process, while using, for example, a destructible stem mold disclosed in US-A-5,242,646. Also, as disclosed in US-A-4,290,832, it can be formed by a method wherein a separate material for forming the headed elements 18 is connected to a material for forming the base 14.

The affixation member 10 may be formed by using not only the "headed element" type fastener member 20 but also other type fastener member such as a "hook-and-loop" type. In this case, "Dual Lock (trade mark)" and "Super Dual Lock (trade mark)", both being produced by 3M Co. Ltd. (Minnesota, USA), are preferably used as a headed element type fastener member, and "Scotchmate (trade mark)", also being produced by 3M Co. Ltd., are preferably used as a hook-and-loop type fastener member.

The affixation member 10 may be firmly secured to the base 12 of the fastener member 20 by the use of hot-melt adhesive 28. The hot-melt adhesive 28 is applied between the back surface 26 of the base 14 of the fastener member 20 and the front surface of the body 12, and softened/molten during the hot-compression molding process, whereby it permeates the material of body 12 to firmly bond the base 14 to the body 12.

The hot-melt adhesive 28 includes a thermoplastic resin material, for example, containing at least one of polyethylene, polypropylene, ionomer, polyurethane, polystyrene, ethylene-vinylacetate copolymer. Ionomer or polyurethane is particularly suitable. Since such materials have an appropriate melting viscosity, they can properly permeate the composite of the body 12 after being softened or molten to exhibit a high adhesiveness. Also they can easily form a film and be used as a hot-melt film which can be readily laid on the back surface 26 of the base 14 of the fastener member 20.

It should be noted that the hot-melt adhesive in the present invention may include not only an adhesive of which entire viscosity is rapidly lowered when exceeding a certain temperature, but also a heat-activated adhesive of which viscosity is partially lowered by heating to manifest an adhesion force, such as a mixture of NBR and phenolic resin.

The hot-melt adhesive 28 may contain together with the above thermoplastic material a well-known additive such as tackifier, sticky agent or lubricant. When these additives are contained therein, the content of thermoplastic resin material in the total weight of hot-melt adhesive 28 is, for example, not less than 50% by weight, preferably not less than 70% by weight, and more preferably not less than 90% by weight. If this value is less than 50% by weight, the adhesiveness of the hot-melt adhesive is liable to lower. When the detachment/attachment of the affixation member 10 onto the article surface is repeated, such the lowering of adhesiveness causes the disengagement of the fastener member 20 from the body 12. Also, the hot-melt adhesive 28 may contain a hardener. Thereby the thermosetting property is imparted to the hot-melt adhesive 28 to further improve the adhesiveness thereof.

The hot-melt adhesive 28 can melt or soften during the hot-compression molding of the body 12, for example, at a temperature above 200°C , preferably above 220°C . The desired adhesiveness of the hot-melt adhesive 28, represented by a force required for peeling the fastener member 20 from the body 12, is more than 0,48 kg/cm² preferably more than 1,12 kg/cm², and more preferably more than 1,6 kg/cm², at a peeling speed of 300 mm/min.

The hot-melt adhesive 28 is applied to the back surface 26 of the base 14 of the fastener member 20, for example, prior to the hot-compression molding of the body 12. That is, a preliminarily molten hot-melt adhesive is coated on the back surface 26 of the base 14, or the hot-melt film is used. The hot-melt film may be merely placed on the back surface or bonded to the back surface 26 by a separate adhesive. Alternatively, if a thermosetting hot-melt film containing hardener is used, it is possible to easily adhere the same on the back surface 26 because it is self-adhesive at a normal temperature. In this connection, a thickness of the hot-melt film is favorably in a range between 0.1 mm and 3.0 mm.

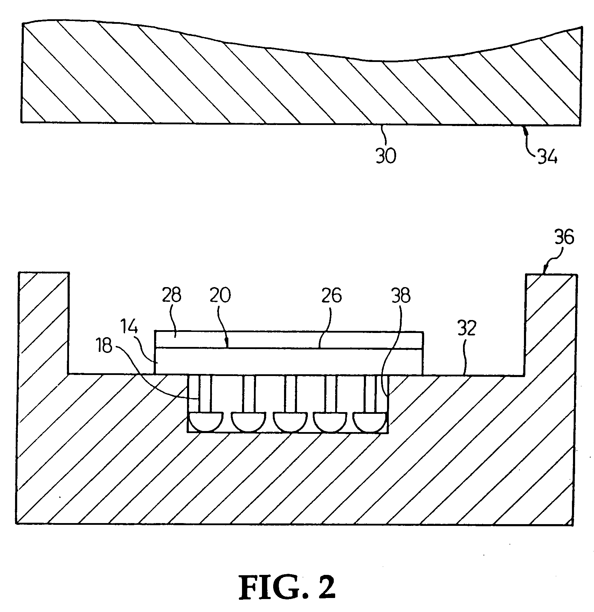

Next, a method for producing the affixation member 10 will be described with reference to Figs. 2 through 4.

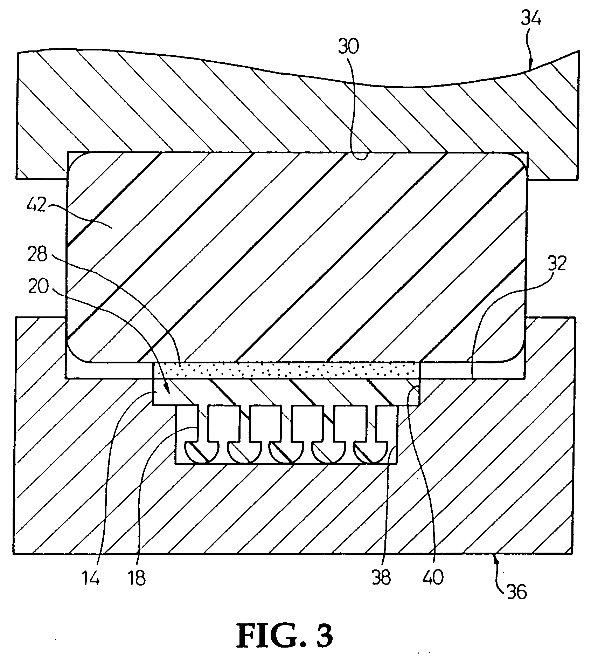

First, an upper mold 34 and a lower mold 36 are prepared, having molding surfaces 30 and 32, respectively, for forming the body 12 of a desired shape through the hot-compression molding process. Cavities for defining the contour of body 12 may be provided only in the lower mold 36 as shown in Fig. 2, or in both of the upper and lower molds 34, 36 as shown in Fig. 3. A recess 38 is provided at a predetermined position of the molding surface 32 of the lower mold 36, for accommodating all of the headed elements 18 of the fastener member 20. The recess 38 is shaped and dimensioned so that it can accommodate the headed elements 18 without deforming the same when the fastener member 20 is laid on the molding surface 32 in the predetermined posture. The lower mold 36 is also capable of holding the fastener member 20 even during the hot-compression molding process while avoiding the plastic deformation of the headed elements 18.

Then, the fastener member 20 applied on the back surface 26 of the base 14 with the hot-melt adhesive layer 28 consisting of hot-melt film is placed on the molding surface 32 of the lower mold 36 so that the hot-melt adhesive layer 28 can be brought into contact with a composite of the body 14, while the headed elements 18 are accommodated within the recess 38. At this time, as shown in Fig. 2, the base 14 of the fastener member 20 is supported by the molding surface 32 and the heads 24 of the respective headed elements 18 arranged on the outermost side of the base 14 are brought into contact with the wall of the recess 38, whereby the fastener member 20 is located at a predetermined position. Alternatively, as shown in Fig. 3, an excised portion 40 may be provided on the edge of the recess 38 for receiving the outer edge of the base 14 of the fastener member 20, so that the fastener member 20 is located at the predetermined position by the excised portion 40. A depth of the recess 40 is preferably not more than a thickness of the base 14. According to the structure of Fig. 3, since the wall of the recess 38 is not necessarily brought into contact with the heads 24 of the headed elements 18, not only the deformation of the headed elements 18 due to heat during the hot-compression molding process can be avoided, but also the damage of the headed elements 18 due to friction when the headed elements 18 is inserted or withdrawn can be prevented. In either of the structures in Figs. 2 and 3, it is important that no gap communicating with the recess 38 is formed around the base 14 when the fastener member 20 is located at a predetermined position on the molding surface 32.

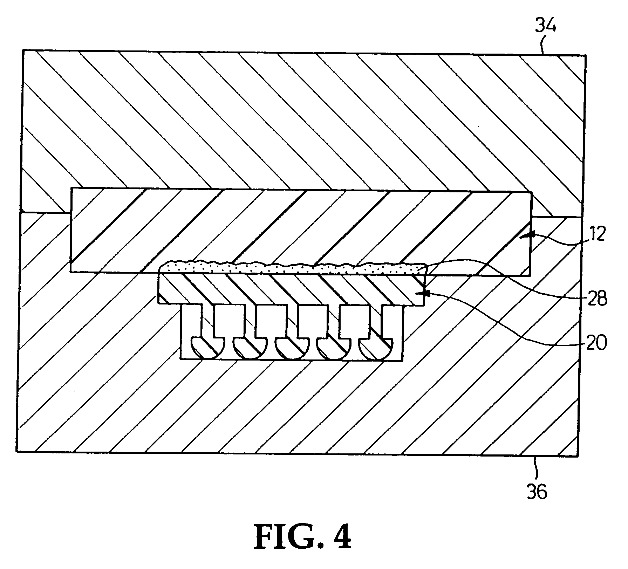

Next, the molding surface 32, on which the fastener member 20 is placed, is positioned opposite to the molding surface 30 of the upper mold 34, and a composite 42 of the body 12 is located between the molding surfaces 30, 32 (Fig. 3). At this time, the hot-melt adhesive layer 28 is brought into contact with the composite 42. The composite 42 is compressed between the upper mold 34 and the lower mold 36 while being heated, so that the body 12 of the desired shape is molded and the hot-melt adhesive layer 28 is softened or molten (Fig. 4). The hot-melt adhesive layer 28 thus softened or molten permeates the composite and solidifies after the lapse of time, whereby the fastener member 20 is firmly secured on the predetermined position of the body 12. Thus, the affixation member 10 illustrated in Fig. 1 is obtained.

The temperature in the hot-compression molding process is preferably in a range between 200°C and 300°C , more preferably, in a range between 220°C and 250°C . If this value is lower than 200°C , the composite 42 insufficiently solidifies to cause the lack of strength of the body 12 and the lowering of fixation force between the fastener member 20 and the body 12. While, if exceeding 300°C, the thermal deformation occurs in the body 12 and the fastener member 20 to deteriorate the function of the affixation member 10. The pressure in the hot-compression molding process is preferably in a range between 1 kg/cm² and 15 kg/cm², more preferably in a range between 3 kg/cm² and 10 kg/cm². If this value is lower than 1 kg/cm², the composite 42 cannot sufficiently solidify to cause the lack of strength of the body 12 and the lowering of fixation force between the fastener member 20 and the body 12. While if exceeding 15 kg/cm², it is difficult to accurately mold the body 12 into a desired shape. In this connection, the time required for the hot-compression molding is in a range between several ten seconds and several minutes, and properly selected in accordance with kinds of composite, desired dimensions of compression or the like.

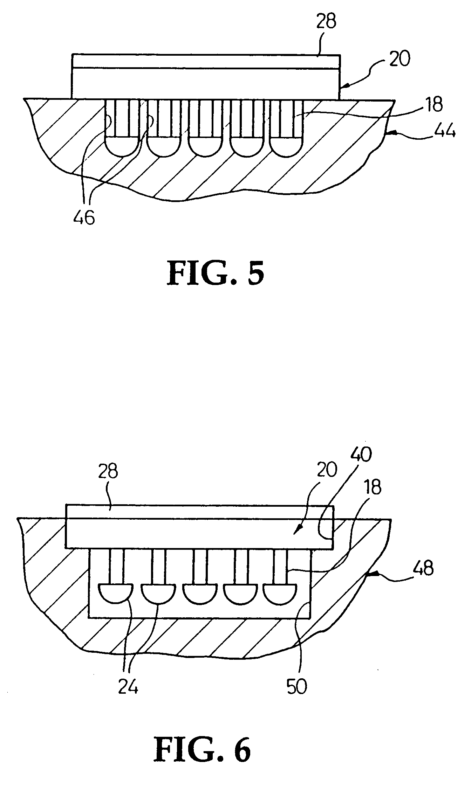

Figs. 5 through 10 illustrate various modifications of mold used in the above production process. A mold 44 shown in Fig. 5 is a modification of the lower mold 36 shown in Fig. 2, and provided with a recess formed by a plurality of holes 46, each for accommodating one headed element 10 of the fastener member 20. The holes 46 locate the fastener member 20 at a predetermined position and effectively prevent the deformation of headed elements 18. It may be possible to modify the structure to accommodate more than two headed elements 18 in one hole 46 while preventing the deformation thereof.

A mold 48 shown in Fig. 6 is a variation of the lower mold 36 of Fig. 3, and provided with a recess 50, all walls of which are not brought into contact with the heads 24 of the headed elements 18. Thereby, the direct heat conduction from the mold 48 to the headed elements 18 is avoided to effectively prevent the deformation of the headed elements 18. Also, during the insertion of the headed elements 18 of the fastener member 20 and during the removal of the affixation member 10 thus produced from the mold 48, the damage of the headed elements 18 due to the friction thereof with the walls can be avoided.

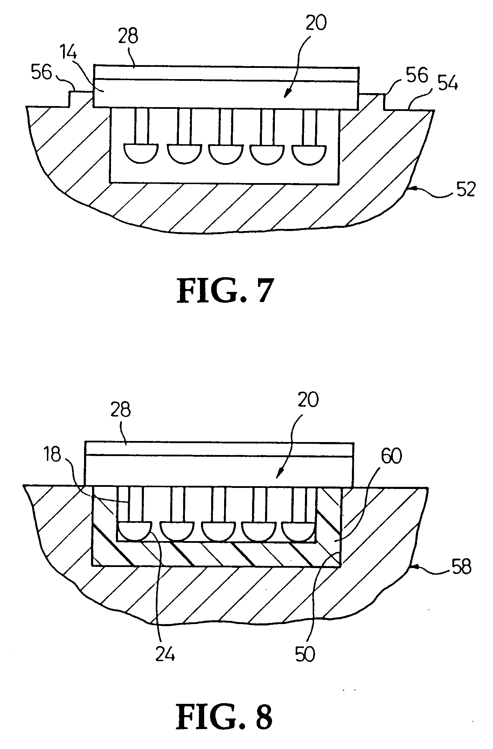

A mold 52 shown in Fig. 7 is provided with a rib 56 projecting from the molding surface 54 to abut to the outer edge of the base 14 of the fastener member 20, alternative to the excised portion 40 in the mold 48 of Fig. 6. Thus, the fastener member 20 is located at the predetermined position on the molding surface 54 by the rib 56. A height of the rib 56 is favorably lower than the thickness of the base 14 not to interfere the contact between the hot-melt adhesive layer 28 and the composite 28. The rib 56 may be of an annular type encircling all over the outer edge of the base 14, but preferably arranged to be partially brought into contact with at least a pair of opposite edges of the base 14.

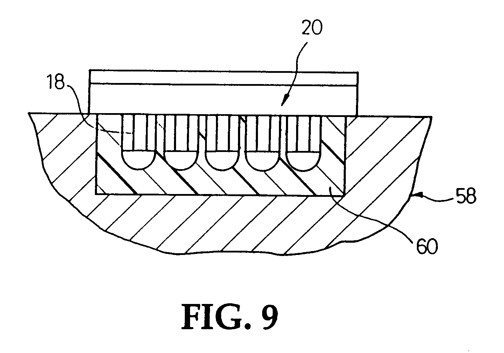

A mold 58 shown in Fig. 8 is provided with a separate member 60 disposed between the recess 50 and the heads 24 of the headed elements 18, alternative to the excised portion 40 in the mold 48 of Fig. 6. The member 60 is brought into contact with walls of recess 50 by its outer periphery and with the heads 24 of the headed elements 18 by its inner periphery so that the fastener member 20 is located at the predetermined position. Also, the member 60 prevents the damage of the headed elements 18 due to heat, friction or others. Such a member 60 is formed, similar to the fastener member 20, of polymeric material or engineering plastic containing inorganic salt such as halite through a well-known molding method, such as injection molding, extrusion molding, or compression molding. Also the member 60 may be of a shape for receiving all the headed elements 18 as shown in Fig. 8, or of another shape for separately receiving more than one headed element 18 as shown in Fig. 9.

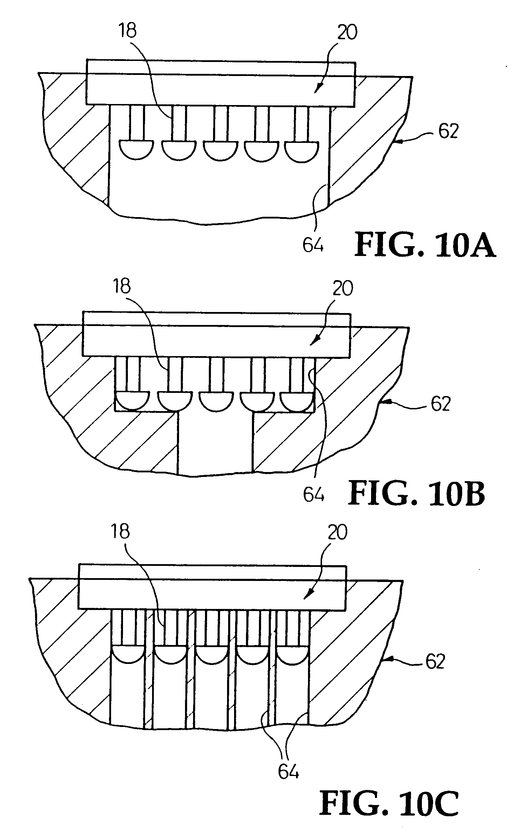

Molds 62 shown in Figs. 10(a) through 10(c) are provided with a recess 64, respectively, of a through-hole type communicating with the outer space from the mold. According to these molds 62, since an air pressure in the recess 64 is maintained at the atmospheric pressure, the insertion of the headed elements 18 of the fastener member 20 and the removal of the affixation member 10 thus produced from the mold 62 become easy.

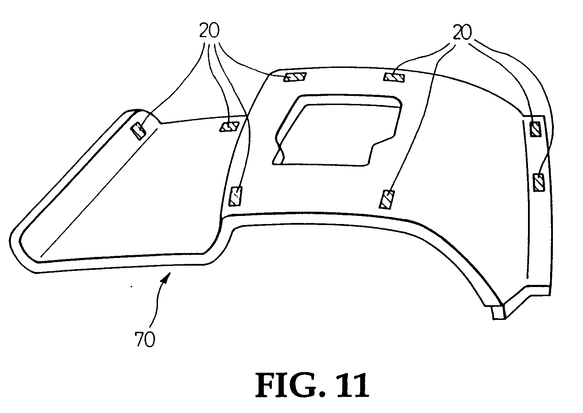

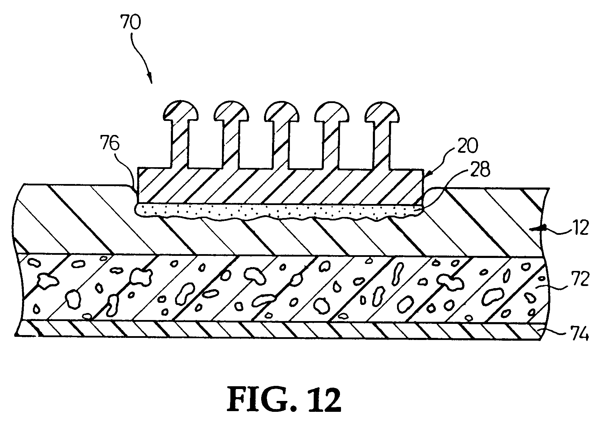

The affixation member according to the present invention is suitably used for an inner trim of vehicle such as automobile. For example, as shown in Figs. 11 and 12, it can be used as an inner trim 70 for a car-ceiling (i.e., a molded ceiling). The inner trim 70 has a body 12, similar to the affixation member 10 of Fig. 1, and a plurality of fastener members 20, each secured onto a predetermined position of the body 12 via a hot-melt adhesive 28. A wadding material 72 having sound-insulation and heat-insulation effects is laid on a surface of the body 12 not carrying the fastener member 20, and further, a top layer 74 is laid on the wadding material 72. on a car roof panel (not shown), a mating fastener member is fixed at a position corresponding to the former fastener member 20 so that the inner trim 70 is secured to the predetermined position on the roof panel by the interengagement between the pairs of fastener members. In this connection, usually four through twenty fastener members 20 are used in the inner trim 70 when it is used as a molded ceiling of car. Accordingly, the mold for producing the inner trim 70 has four through twenty recesses in the molding surface of the lower mold of various structures described above.

The wadding material 72 is disposed between the body 12 and the top layer 74 so that desired functions are imparted to the inner trim 70, such as shock-absorption, sound-absorption, sound-insulation or heat-insulation. Foam containing resin such as polyolefin, polyurethane or polyvinyl chloride can be used as the wadding material. A thickness of the wadding material 72 is preferably in a range between 1 mm and 5 mm. The top layer 74 is to give a decorative design to the inner trim 70 and improve the feel and appearance thereof. Plastic sheet such as polyvinyl chloride or polyolefin and fabric such as non-woven web can be used as the top layer 74. A thickness of the top layer 74 is preferably in a range between 0.1 mm and 0.5 mm.

As shown in Fig. 12, if the body 12 is molded by using the mold shown, for example, in Fig. 2, the base 14 of the interengaging fastener member 20 is slightly embedded in the body 12 due to elasticity of the body 12 and fixed as it is, whereby a small trench 76 is formed along the outer edge of the base 14. If the body 12 and the wadding material 72 have a thickness sufficient not to bulge the top layer 74 by the deformation of the base 14, this structure is preferable to the affixation member 10 shown in Fig. 1 because the stronger fixation is obtainable between the interengaging fastener member 20 and the body 12.

The following three methods can be proposed for the production of the inner trim 70.
(i) The composite of the body 12 preliminarily bonded with the wadding material 72 and the top layer 74 is inserted into the mold, in which the hot-compression molding of the body 12 is then carried out.
(ii) The wadding material 72 and the top layer 74 are bonded to the body 12 simultaneously with the molding of the body 12 from the composite. In this connection, adhesives similar to the hot-melt adhesive 28 are preliminarily applied between the body 12 and the wadding material 72 and between the wadding material 72 and the top layer 74.
(iii) The wadding material 72 and the top layer 74 are bonded to the body 12 obtained through the hot-compression molding.

Of them, the method (ii) is especially suitable because it improves the productivity of the inner trim 70.

As apparent from the above description, since the hot-melt adhesive is applied between the back surface of the base of the interengaging fastener member and the front surface of the body, according to the present invention, and molten or softened by heat used for forming the body through the hot-compression molding process, the interengaging fastener member is firmly secured onto the body simultaneously with the molding of the body. Accordingly, an affixation member with an interengaging fastener member having a base of a usual shape is obtained, which can be readily and assuredly attached on the objective article surface and fixedly secured at the predetermined position. Also, according to the inventive production method, the number of processes for the production of the affixation member can be reduced, whereby the reduction of production cost and the improvement of working efficiency can be achieved. Further, since the recess is provided in the mold for molding the body, for accommodating the engaging part of the interengaging fastener member, the molding of the body and the fixation of the interengaging fastener member with the base can be attained, while avoiding the damage of the engaging part during the compression molding. As stated above, according to the present invention, the affixation member with the interengaging fastener member firmly fixed to the base, having excellent functions is obtained at a higher reliability and a lower cost.

## Claims

1. An affixation member comprising
- a body (12) for covering an article surface, said body (12) being molded by hot-compressing a material (42) into a desired shape,
- an interengaging fastener member (20) having a base (14) connected with the body (12), the interengaging fastener member (20) having an engaging part (18) provided on a major surface (16) of the base (14) and projecting from the body (12), said affixation member being secured to the article surface by engaging the engaging part (18) of the interengaging fastener member (20) with the article surface, and
- a hot melt adhesive layer (28) interposed between a back surface (26) of said base (14) and a surface of said body (12),
**characterized in that**
- said interengaging fastener member (20) is fixed at a predetermined position on said body (12) by hot-compressing the body (12) to a thickness of about one third to about one tenth of its original thickness so that said hot-melt adhesive layer (28) permeates into said body (12).

2. An affixation member as defined by claim 1, wherein said body (12) is molded from a composite containing thermoplastic resin and filler.

3. An affixation member as defined by claim 1 or 2 wherein said engaging part (18) of said interengaging fastener member (20) comprises a plurality of headed elements arranged on said base (14) in a predetermined spaced relationship, each of said headed elements including a stem (22) projecting from the major surface (16) of said base (14), and a head (24) connected to a distal end of said stem (22).

4. An affixation member as defined by claim 1 or 2 used as an inner trim (70) for a vehicle, wherein a top layer (74) is laid on a surface with no interengaging fastener member of said body (12).

5. A method for producing an affixation member comprising
(1) a body (12) for covering an article surface, molded by hot-compressing a material (42) into a desired shape, and
(2) an interengaging fastener member (20) having a base (14) connected with the body (12) and an engaging part (18) provided on a major surface (16) of the base (14) and projected from the body (12), said affixation member being secured to the article surface by engaging the engaging part (18) of the interengaging fastener member (20) with the article surface,
said method comprising the steps of
a) preparing a pair of molds (34,36;34,44;34,48;34, 52;34,58;34,62), each having a molding surface (30,32;30,58) for compression-molding said body (12), at least one of which has a recess (38;46; 50;64) at a predetermined position of said molding surface (30,32) for accommodating said engaging part (18) of said interengaging fastener member (20),
b) placing, on said molding surface (32;58) of said mold (34;44;48;52;58;62) having said recess (38; 46;50;64), said interengaging fastener member (20) with a hot-melt adhesive layer (28) on a back surface (26) of said base (14) opposite to said major surface (16), so that said engaging part (18) is accommodated in said recess (38;46; 50;64) and the hot-melt adhesive layer (28) is adapted to be brought into contact with said material (42) of said body (12),
c) arranging said molding surface (32;58) of the mold (34;44;48;52;58;62), on which said interengaging fastener member (20) is placed, adapted to be opposite to said molding surface (30) of another mold (34), and disposing said material (42) of said body (12) between these molding surfaces (30,32;30,52),
d) heating and compressing said material (42) of said body (12) between said pair of molds (34,36; 34,44;34,48;34,52;34,58;34,62), and
e) solidifying said hot-melt adhesive layer (28), so as to fix said interengaging fastener member (20) at a predetermined position of said body (12) molded,
**characterized in that**
said step of heating and compressing said material (42) of said body (12) comprises compressing said material (42) of said body (12) between said pair of molds (34,36;34,44;34,48;34,52;34,58;34,62) to a thickness of about one third to one tenth of its original thickness, so as to mold said body (12) of desired shape and to soften the hot-melt adhesive layer (28).

6. A method as defined by claim 5, wherein said mold (34;44;48;52;58;62) with the recess (38;46;50;64) prepared in step a) holds said interengaging fastener member (20) at a predetermined position without any plastic deformation of said engaging part (18) of said interengaging fastener member (20) during the compression in step d).

7. A method as defined by claim 6, wherein said recess (38;46;50;64) of said mold (34;44;48;58;62) has a wall capable of being brought into contact with said engaging part (18) of said interengaging fastener member (20) without the deformation of said engaging part (18).

8. A method as defined by claim 6, wherein said recess (50;64) of said mold (48;52;62) is capable of accommodating said engaging part (18) of said interengaging fastener member (20) without being brought into contact with said engaging part (18).

9. A method as defined by any one of claims 6 through 8, wherein an excised portion (56) is provided on the edge of said recess (50), for receiving the outer edge portion of said base (14) of said interengaging fastener member (20).

10. A method as defined by any one of claims 5 through 9, wherein said engaging part (18) of said interengaging fastener member (20) comprises a plurality of headed elements arranged on said base (14) in a predetermined spaced relationship, each of said headed elements including a stem (22) projecting from the major surface (16) of said base (14), and a head (24) connected to a distal end of said stem (22), and wherein said mold (44;58;62) with said recess (46;50;64) prepared in step a) comprises a plurality of holes, each for accommodating at least one headed element.

11. A mold for producing an affixation member comprising
(1) a body (12) for covering an article surface, molded by hot-compressing a material (42) into a desired shape, and
(2) an interengaging fastener member (20) having a base (14) connected with the body (12) and an engaging part (18) provided on a major surface (16) of the base (14) and projected from the body (12), said affixation member (10) being secured to the article surface by engaging the engaging part (18) of the interengaging fastener member (20) with the article surface,
**characterized in that**
said mold (36;44;48;52;58;62) has a recess (38;46;50;64) at a predetermined position of a molding surface (32;58) for compression-molding the material of said body (12) to a thickness of about one third to one tenth of its original thickness, to accommodate said engaging part (18) of said interengaging fastener member (20), so that said interengaging fastener member (20) is held at a predetermined position without any plastic deformation of said engaging part (18) of said interengaging fastener member (20) during the compression process.

12. A mold as defined by claim 11, wherein said recess (38;46;50;64) has a wall capable of being brought into contact with said engaging part (18) of said interengaging fastener member (20) without any deformation of said engaging part (18).

13. A mold as defined by claim 11, wherein said recess (50;64) is capable of accommodating said engaging part (18) of said interengaging fastener member (20) without being brought into contact with said engaging part (18).

14. A mold as defined by any one of claims 11 through 13, wherein an excised portion (56) is provided on the edge of said recess (50), for receiving the outer edge portion of said base (14) of said interengaging fastener member (20).

15. A mold as defined by any one of claims 11 through 14, wherein said engaging part (18) of said interengaging fastener member (20) comprises a plurality of headed elements arranged on said base (14) in a predetermined spaced relationship, each of said headed elements including a stem (22) projecting from the major surface (16) of said base (14), and a head (24) connected to a distal end of said stem (22), and wherein said recess (46;50;64) comprises a plurality of holes, each for accommodating at least one headed element.

## Patentansprüche

1. Befestigungselement mit
- einem Körper (12) zum Anbringen an einer Oberfläche eines Artikels, wobei der Körper (12) durch Heißpressen des Materials (42) in die gewünschten Form gebracht wird,
- einem Zusammengriffs-Befestigungsteil (20) mit einer mit dem Körper (12) verbundenen Basis (14), wobei das Zusammengriffs-Befestigungsteil (20) ein vom Körper (12) abstehendes Eingriffselement (18) auf einer Hauptfläche (16) der Basis (14) aufweist und das Befestigungselement durch Eingreifen des Eingriffselementes (18) des Zusammengriffs-Befestigungsteils (20) in die Artikeloberfläche auf dieser befestigt wird, und
- Heißschmelz-Klebeschicht (28) zwischen der Rückseite (26) der Basis (14) und einer Fläche des Körpers (12),
**dadurch gekennzeichnet**, **daß**
- das Zusammengriffs-Befestigungsteil (20) in einer vorbestimmten Position an dem Körper (12) durch Heißpressen des Körpers (12) auf eine Dicke von ungefähr einem Drittel bis ungefähr einem Zehntel der Originaldicke befestigt wird, so daß die Heißschmelz-Klebeschicht (28) in den Körper (12) eindringt.

2. Befestigungselement nach Anspruch 1, bei dem der Körper (12) aus einem Verbundstoff mit thermoplastischem Harz und Füllmaterial geformt ist.

3. Befestigungselement nach Anspruch 1 oder 2, bei dem das Eingriffselement (18) des Zusammengriffs-Befestigungsteils (20) mehrere auf der Basis (14) in einem vorbestimmten Abstand angeordnete Kopfelemente aufweist, wobei jedes Kopfelement einen von der Hauptfläche (16) der Basis (14) abstehenden Schaft (22) und einen mit dem distalen Ende des Schaftes (22) verbundenen Kopf (24) hat.

4. Befestigungselement nach Anspruch 1 oder 2, welches als innerer Randbereich (70) für ein Fahrzeug Verwendung findet, bei dem eine obere Schicht (74) ohne Zusammengriffs-Befestigungsteil des Körpers (12) auf eine Fläche aufgelegt wird.

5. Verfahren zur Herstellung eines Befestigungselementes mit
(1) einem Körper (12) zum Anbringen an einer Artikeloberfläche geformt durch Heißpressen des Materials (42) in die gewünschten Form, und
(2) Zusammengriffs-Befestigungsteil (20) mit einer mit dem Körper (12) verbundenen Basis (14) und einem vom Körper (12) abstehenden Eingriffselement (18) auf einer Hauptfläche (16) der Basis (14), wobei das Befestigungselement durch Eingreifen des Eingriffselementes (18) des Zusammengriffs-Befestigungsteils (20) in die Artikeloberfläche auf dieser befestigt wird,
wobei dieses Verfahren folgende Schritte aufweist:
a) Fertigung eines Paares von Formteilen (34, 36; 34, 44; 34, 48; 34, 52; 34, 58; 34, 62), die jeweils eine Formfläche (30, 32; 30, 58) zum Formpressen des Körpers (12) aufweisen, und von denen mindestens eines eine Aussparung (38; 46; 50;64) in einer vorbestimmten Position der Formfläche (30, 32) zur Aufnahme des Eingriffselementes (18) des Zusammengriffs-Befestigungsteils (20) aufweist,
b) Aufbringen des Zusammengriffs-Befestigungsteils (20) mittels einer Heißschmelz-Klebeschicht (28) auf der Rückseite (26) der Basis (14) gegenüber der Hauptfläche (16) auf den Formflächen (32; 58) des Formteils (34; 44; 48; 52; 58; 62) mit der Aussparung (38; 46; 50;64), so daß das Eingriffselement (18) in der Aussparung (38; 46; 50; 64) aufgenommen wird und die Heißschmelz-Klebeschicht (28) in Berührung mit dem Material (42) des Körpers (12) gebracht wird,
c) Anordnung der Formfläche (32; 58) desjenigen Formteils (34; 44; 48; 52; 58; 62), auf dem sich das Zusammengriffs-Befestigungsteil (20) befindet, so daß diese der Formfläche (30) des anderen Formteils (34) gegenüberliegt, und Anordnung des Materials (42) des Körpers (12) zwischen diesen Formflächen (30, 32; 30, 52),
d) Erwärmen und Zusammenpressen des Materials (42) des Körpers (12) zwischen dem Paar von Formteilen (34, 36; 34, 44; 34, 48; 34, 52; 34, 58; 34, 62) und
e) Erstarrenlassen der Heißschmelz-Klebeschicht (28) zwecks Befestigung des Zusammengriffs-Befestigungsteils (20) an einer vorbestimmten Position des geformten Körpers (12),
**dadurch gekennzeichnet**, **daß**
der Schritt des Erwärmens und Zusammenpressens des Materials (42) des Körpers (12) das Zusammenpressen des Materials (42) des Körpers (12) zwischen dem Paar von Formteilen (34, 36; 34, 44; 34, 48; 34, 52; 34, 58; 34, 62) auf eine Dicke von ungefähr einem Drittel bis einem Zehntel der Originaldicke umfaßt zwecks Formens des Körpers (12) in die gewünschte Form und Erweichen der Heißschmelz-Klebeschicht (28).

6. Verfahren nach Anspruch 5, bei dem das in Schritt a) gefertigte Formteil (34; 44; 48; 52; 58; 62) mit der Aussparung (38; 46; 50; 64) das Zusammengriffs-Befestigungsteil (20) in einer vorbestimmten Position ohne plastische Verformung des Eingriffselementes (18) des Zusammengriffs-Befestigungselementes (20) während des Zusammenpressens aus Schritt d) aufweist.

7. Verfahren nach Anspruch 6, bei dem die Aussparung (38; 46; 50; 64) des Formteils (34; 44; 48; 58; 62) eine Wand aufweist, die mit dem Eingriffselement (18) des Zusammengriffs-Befestigungsteils (20) ohne Verformung des Eingriffselementes (18) in Berührung gebracht werden kann.

8. Verfahren nach Anspruch 6, bei dem die Aussparung (50; 64) des Formteils (48; 52; 62) das Eingriffselement (18) des Zusammengriffs-Befestigungsteils (20) ohne Berührung mit dem Eingriffselement (18) aufnehmen kann.

9. Verfahren nach einem der Ansprüche 6 bis 8, bei dem ein erhabener Bereich (56) am Rand der Aussparung (50) zwecks Aufnahme des äußeren Randbereichs der Basis (14) des Zusammengriffs-Befestigungsteils (20) vorgesehen ist.

10. Verfahren nach einem der Ansprüche 5 bis 9, bei dem das Eingriffselement (18) des Zusammengriffs-Befestigungsteils (20) eine Anzahl von in vorbestimmtem Abstand auf der Basis (14) angeordneten Kopfelementen aufweist, wobei jedes Kopfelement einen von der Hauptfläche (16) der Basis (14) abstehenden Schaft (22) und einen mit dem distalen Ende des Schaftes (22) verbundenen Kopf umfaßt, und bei dem das in Schritt a) gefertigte, die Aussparung (46; 50; 64) aufweisende Formteil (44; 58; 62) mehrere Löcher aufweist, von denen jedes mindestens ein Kopfelement aufnimmt.

11. Form zur Herstellung eines Befestigungselementes mit
(1) einem Körper (12) zum Anbringen an einer Artikeloberfläche geformt durch Heißpressen des Materials (42) in die gewünschte Form, und
(2) einem Zusammengriffs-Befestigungsteil (20) mit einer mit dem Körper (12) verbundenen Basis (14) und einem von dem Körper (12) abstehenden Eingriffselement (18) auf einer Hauptfläche (16) der Basis (14), wobei das Befestigungselement (10) durch Eingriff des Eingriffselementes (18) des Zusammengriffs-Befestigungsteils (20) in die Artikeloberfläche an dieser befestigt wird,
**dadurch gekennzeichnet**, **daß**
das Formteil (36; 44; 48; 52; 58; 62) eine Aussparung (38; 46; 50; 64) in einer vorbestimmten Position einer Formfläche (32; 58) zum Formpressen des Materials des Körpers (12) auf eine Dicke von ungefähr einem Drittel bis einem Zehntel seiner Originaldicke aufweist zwecks Aufnahme des Eingriffselementes (18) des Zusammengriffs-Befestigungsteils (20), so daß das Zusammengriffs-Befestigungsteil (20) ohne plastische Verformung des Eingriffselementes (18) des Zusammengriffs-Befestigungsteils (20) während des Zusammenpressens in einer vorbestimmten Position gehalten wird.

12. Form nach Anspruch 11, bei der die Aussparung (38; 46; 50; 64) eine Wand aufweist, die mit dem Eingriffselement (18) des Zusammengriffs-Befestigungsteils (20) ohne Verformung des Eingriffselementes (18) in Berührung gebracht werden kann.

13. Form nach Anspruch 11, bei der die Aussparung (50; 64) das Eingriffselement (18) des Zusammengriffs-Befestigungsteils (20) ohne Berührung mit dem Eingriffselement (18) aufnehmen kann.

14. Form nach einem der Ansprüche 11 bis 13, bei der ein erhabener Bereich (56) am Rand der Aussparung (50) zur Aufnahme des äußeren Randbereichs der Basis (14) des Zusammengriffs-Befestigungsteils (20) vorgesehen ist.

15. Form nach einem der Ansprüche 11 bis 14, bei der das Eingriffselement (18) des Zusammengriffs-Befestigungsteils (20) eine Anzahl von in einem vorbestimmten Abstand auf der Basis (14) angeordneten Kopfelementen aufweist, wobei jedes Kopfelement einen von der Hauptfläche (16) der Basis (14) abstehenden Schaft (22) und einen mit dem distalen Ende des Schaftes (22) verbundenen Kopf (24) umfaßt, und bei der die Aussparung (46; 50; 64) mehrere Löcher aufweist, von denen jedes mindestens ein Kopfelement aufnimmt.

## Revendications

1. Elément de fixation comportant :
- un corps (12) destiné à recouvrir une surface d'article ledit corps (12) étant moulé par compression à chaud d'un matériau (42) dans une forme voulue,
- un élément de fixation par accouplement (20) ayant une base (14) reliée au Corps (12), l'élément de fixation par accouplement (20) ayant une partie d'accouplement (18) agencée sur une surface principale (16) de la base (14) et faisant saillie à partir du corps (12), ledit élément de fixation étant fixé sur la surface d'article par accouplement de la partie d'accouplement (18) de l'élément de fixation par accouplement (20) avec la surface d'article, et
- une couche d'adhésif fusible à chaud (28) interposée entre une surface arrière (26) de ladite base (14) et une surface dudit corps (12),
caractérisé en ce que
- ledit élément de fixation par accouplement (20) est fixe au niveau d'une position prédéterminée sur ledit corps (12) par compression à chaud du corps (12) jusqu'à une épaisseur d'environ un tiers à environ un dixième de son épaisseur d'origine de sorte que ladite couche d'adhésif fusible à chaud (28) pénètre dans ledit corps (12).

2. Elément de fixation selon la revendication 1, dans lequel ledit corps (12) est moulé à partir d'un composite comportant une résine thermoplastique et un agent de remplissage.

3. Elément de fixation selon la revendication 1 ou 2, dans lequel ladite partie d'accouplement (18) dudit élément de fixation par accouplement (20) comporte une pluralité d'éléments munis d'une tête agencés sur ladite base (14) selon une relation d'espacement prédéterminée, chacun desdits éléments munis d'une tête comportant une tige (22) faisant saillie à partir de la surface principale (16) de ladite base (14), et une tête (24) reliée à une extrémité distale de ladite tige (22).

4. Elément de fixation selon la revendication 1 ou 2, utilisé en tant que garniture intérieure (70) d'un véhicule, dans lequel une couche supérieure (74) est agencée sur une surface dudit corps (12) n'ayant pas d'élément de fixation par accouplement.

5. Procédé pour produire un élément de fixation comportant :
(1) un corps (12) pour recouvrir une surface d'article, moulé par compression à chaud d'un matériau (42) selon une forme voulue, et
(2) un élément de fixation par accouplement (20) ayant une base (14) reliée au corps (12) et une partie d'accouplement (18) agencée sur une surface principale (16) de la base (14) et faisant saillie à partir dudit corps (12), ledit élément de fixation étant fixé sur la surface d'article en accouplant la partie d'accouplement (18) de l'élément de fixation par accouplement (20) avec la surface de l'article,
le procédé comportant les étapes consistant à :
a) préparer deux moules (34, 36 ; 34, 44 ; 34, 48 ; 34, 52 ; 34, 58 ; 34, 62), ayant chacun une surface de moulage (30, 32 ; 30, 58) pour mouler par compression ledit corps (12), dont au moins une a un évidement (38 ; 46 ; 50 ; 64) situé au niveau d'une position prédéterminée de ladite surface de moulage (30, 32) pour recevoir ladite partie d'accouplement (18) dudit élément de fixation par accouplement (20),
b) placer sur ladite surface de moulage (32 ; 58) dudit moule (34 ; 44 ; 48 ; 52 ; 58 ; 62) ayant ledit évidement (38 ; 46 ; 50 ; 64), ledit élément de fixation par accouplement (20) ayant une couche d'adhésif fusible à chaud (28) située sur une surface arrière (26) de ladite base opposée à ladite surface principale (16), de sorte que ladite partie d'accouplement (18) est reçue dans ledit évidement (38 ; 46 ; 50 ; 64) et la couche d'adhésif fusible à chaud (28) est adaptée pour être amenée en contact avec ledit matériau (42) dudit corps (12),
c) agencer ladite surface de moulage (32 ; 58) du moule (34 ; 44 ; 48 ; 52 ; 58 ; 62), sur laquelle ledit élément de fixation par accouplement (20) est placé, de manière adaptée pour qu'elle soit opposée à ladite surface de moulage (30) d'un autre moule (34), et disposer ledit matériau (42) dudit corps (12) entre ces surfaces de moulage (30, 32 ; 30, 52),
d) chauffer et comprimer ledit matériau (42) dudit corps (12) entre lesdits deux moules (34, 36 ; 34, 44 ; 34, 48 ; 34, 52 ; 34, 58 ; 34, 62), et
e) solidifier ladite couche d'adhésif fusible à chaud (28), de manière à fixer ledit élément de fixation par accouplement (20) au niveau d'une position prédéterminée dudit corps (12) moulé,
caractérisé en ce que
ladite étape consistant à chauffer et comprimer ledit matériau (42) dudit corps (12) consiste à comprimer ledit matériau (42) dudit corps (12) entre les deux moules (34, 36 ; 34, 44 ; 34, 48 ; 34, 52 ; 34, 58 ; 34, 62) jusqu'à une épaisseur d'environ un tiers à un dixième de son épaisseur d'origine, de manière à mouler ledit corps (12) selon une forme voulue et à ramollir la couche d'adhésif fusible à chaud (28).

6. Procédé selon la revendication 5, dans lequel ledit moule (34 ; 44 ; 48 ; 52 ; 58 ; 62) ayant l'évidement (38 ; 46 ; 50 ; 64) préparé à l'étape a) maintient ledit élément de fixation par accouplement (20) au niveau d'une position prédéterminée sans aucune déformation plastique de ladite partie d'accouplement (18) dudit élément de fixation par accouplement (20) pendant la compression de l'étape d).

7. Procédé selon la revendication 6, dans lequel ledit évidement (38 ; 46 ; 50 ; 64) dudit moule (34 ; 44 ; 48 ; 58 ; 62) a une paroi pouvant être amenée en contact avec ladite partie d'accouplement (18) dudit dispositif de fixation par accouplement (20) sans déformer ladite partie d'accouplement (18).

8. Procédé selon la revendication 6, dans lequel ledit évidement (50 ; 64) dudit moule (48 ; 52 ; 62) peut recevoir ladite partie d'accouplement (18) dudit élément de fixation par accouplement (20) sans être amené en contact avec ladite partie d'accouplement (18).

9. Procédé selon l'une quelconque des revendications 6 à 8, dans lequel une partie entaillée (56) est agencée sur le bord dudit évidement (50), pour recevoir la partie de bord extérieur de ladite base (14) dudit élément de fixation par accouplement (20).

10. Procédé selon l'une quelconque des revendications 5 à 9, dans lequel ladite partie d'accouplement (18) dudit élément de fixation par accouplement (20) comporte une pluralité d'éléments munis d'une tête agencés sur ladite base (14) selon une relation d'écartement prédéterminée, chacun desdits éléments munis d'une tête comportant une tige (22) faisant saillie à partir de la surface principale (16) de ladite base (14), et une tête (24) reliée à une extrémité distale de ladite tige (22), et dans lequel ledit moule (44 ; 58 ; 62) ayant ledit évidement (46 ; 50 ; 64) préparé à l'étape a) comporte une pluralité de trous, chacun étant destiné à recevoir au moins un élément muni d'une tête.

11. Moule pour produire un élément de fixation comportant
(1) un corps (12) pour recouvrir une surface d'article, moulé par compression à chaud d'un matériau (42) selon une forme voulue, et
(2) un élément de fixation par accouplement (20) ayant une base (14) reliée au corps (12) et une partie d'accouplement (18) agencée sur une surface principale (16) de la base (14) et faisant saillie à partir du corps (12), ledit élément de fixation (10) étant fixé sur la surface d'article par accouplement de la partie d'accouplement (18) de l'élément de fixation par accouplement (20) avec la surface d'article,
caractérisé en ce que
ledit moule (36 ; 44 ; 48 ; 52 ; 58 ; 62) à un évidement (38 ; 46 ; 50 ; 64) au niveau d'une position prédéterminée d'une surface de moulage (32 ; 58) pour mouler par compression le matériau dudit corps (12) jusqu'à une épaisseur d'environ un tiers à un dixième de son épaisseur d'origine, pour recevoir ladite partie d'accouplement (18) dudit élément de fixation par accouplement (20), de sorte que ledit élément de fixation par accouplement (20) est maintenu au niveau d'une position prédéterminée sans aucune déformation plastique de ladite partie d'accouplement (18) dudit élément de fixation par accouplement (20) pendant le processus de compression.

12. Moule selon la revendication 11, dans lequel ledit évidement (38 ; 46 ; 50 ; 64) a une paroi pouvant être amenée en contact avec ladite partie d'accouplement (18) dudit élément de fixation par accouplement (20) sans aucune déformation de ladite partie d'accouplement (18).

13. Moule selon la revendication 11, dans lequel ledit évidement (50 ; 64) peut recevoir ladite partie d'accouplement (18) dudit élément de fixation par accouplement (20) sans être amené en contact avec ladite partie d'accouplement (18).

14. Moule selon l'une quelconque des revendications 11 à 13, dans lequel une partie entaillée (56) est agencée sur le bord dudit évidement (50) pour recevoir la partie de bord extérieur de ladite base (14) dudit élément de fixation par accouplement (20).

15. Moule selon l'une quelconque des revendications 11 à 14, dans lequel ladite partie d'accouplement (18) dudit élément de fixation par accouplement (20) comporte une pluralité d'éléments munis d'une tête agencés sur ladite base (14) dans une relation d'écartement prédéterminée, chacun desdits éléments munis d'une tête comportant une tige (22) faisant saillie à partir de la surface principale (16) de ladite base (14) et une tête (24) reliée à une extrémité distale de ladite tige (22), et dans lequel ledit évidement (46 ; 50 ; 64) comporte une pluralité de trous, chacun étant destiné à recevoir au moins un élément muni d'une tête.
